# EUROPEAN PATENT APPLICATION

(11) **EP 3 695 952 A1**
(43) Date of publication of application: **19.08.2020**
(21) Application number: 20156142.0
(22) Date of filing: 07.02.2020
(51) Int. Cl.: B29C 64/112, B29C 64/40, B33Y 10/00

(54) **THREE-DIMENSIONAL OBJECT SHAPING METHOD**

(30) Priority: 13.02.2019 JP 2019024001
(71) Applicant: Mimaki Engineering Co., Ltd., Tomi-shi, Nagano 389-0512 (JP)
(72) Inventor: Hakkaku, Kunio, Tomi-city, Nagano 389-0512 (JP)
(74) Representative: Bandpay & Greuter

(57) **Abstract**

A three-dimensional object shaping method is a three-dimensional object shaping method for forming a multilayered body by layering an ink layer on a work surface, the three-dimensional object shaping method including a void portion forming step of forming a void portion (66) surrounded by the ink by layering the ink layer on the work surface or in a range surrounding a predetermined region in an uppermost layer of the ink layer formed on the work surface; and an overhang portion forming step of forming upward an overhang portion (61H) that bulges out from an outer peripheral side toward an inner side of the void portion and surrounds the void portion in a state where a part of the ink protrudes out toward the inner side of the void portion at a layering angle in a range in which an outer shape of the void portion is not lost when disposing new ink on the ink facing the void portion in a case where a new ink layer is layered on the ink layer including the void portion.

## Description

### TECHNICAL FIELD

The present disclosure relates to a three-dimensional object shaping method.

### DESCRIPTION OF THE BACKGROUND ART

A technique for forming a cavity inside a three-dimensional object for the purpose of, for example, reducing the weight, reducing the material cost, and the like in a three-dimensional object shaped by layering shaping materials with a three-dimensional printer is conventionally known (see e.g., Japanese Unexamined Patent Publication No. 2017-071154 and Japanese Unexamined Patent Publication No. 2017-217889).

### SUMMARY

However, in the methods disclosed in Japanese Unexamined Patent Publication No. 2017-071154 and Japanese Unexamined Patent Publication No. 2017-217889, in order to provide an internal cavity in the three-dimensional object, a recess is formed in a multilayered body, the recess is closed with a lid member or a solid object, and then a new ink layer is layered on the lid member or the solid object. In this case, for example, if the lid member or the solid object is tilted when closing, it interferes with the head that ejects ink, and hence it becomes difficult to form a three-dimensional object having a cavity and it also becomes a cause of a failure. Therefore, the step for closing the recess with the lid member or the solid material requires precise accuracy regardless of whether it is automatic or manual.

In view of the above, the present disclosure provides a three-dimensional object shaping method capable of easily forming an overhang portion surrounding a void portion.

A three-dimensional object shaping method according to the present invention relates to a three-dimensional object shaping method for forming a multilayered body by layering an ink layer on a work surface, the three-dimensional object shaping method including a void portion forming step of forming a void portion surrounded by the ink by layering the ink layer on the work surface or in a range surrounding a predetermined region in an uppermost layer of the ink layer formed on the work surface; and an overhang portion forming step of forming upward an overhang portion that bulges out from an outer peripheral side toward an inner side of the void portion and surrounds the void portion in a state where a part of the ink protrudes out toward the inner side of the void portion at a layering angle in a range in which an outer shape of the void portion is not lost when disposing new ink on the ink facing the void portion in a case where a new ink layer is layered on the ink layer including the void portion.

According to the present invention, a void portion can be formed in a part of the ink layer, and an overhang portion can be formed on the inner side at a layering angle in a range in which the outer shape of the void portion is not lost from the outer peripheral side of the void portion. The overhang portion surrounding the void portion thus can be easily formed.

Furthermore, the three-dimensional object shaping method further includes a cavity portion forming step of forming a cavity portion by disposing the ink on the overhang portion and closing the void portion. The cavity portion thus can be easily formed inside the three-dimensional object. In addition, a lid member or a solid object becomes unnecessary and the degree of freedom in design such as the arrangement, volume, and the like of the cavity portion increases as compared with the method for forming the cavity portion by providing a recess inside the three-dimensional object and closing it with a lid member or a solid object.

In the three-dimensional object shaping method described above, the overhang portion forming step may include overlapping and disposing a plurality of layers of the ink on the ink in a state where a part protrudes out toward the inner side of the void portion. As a result, the angle formed by the work surface and a wall surface on the inner side of the overhang portion is increased, so that the shape of the overhang portion can be stabilized without losing shape.

Furthermore, in the three-dimensional object shaping method described above, in the overhang portion forming step, the ink may be overlapped by a number of layers in which an angle formed by the work surface and a wall surface on the inner side of the overhang portion is greater than or equal to 60° and less than or equal to 90°. Thus, the angle formed by the work surface and the wall surface on the inner side of the overhang portion is increased, so that the shape of the overhang portion can be stabilized without losing shape.

In the three-dimensional object shaping method described above, the ink may be dropped at a predetermined pitch in a matrix shape in a plan view; and in the overhang portion forming step, the ink may be dropped by shifting an ink dropping position by one pitch toward the inner side of the void portion so that a part of the ink protrudes out toward the inner side of the void portion. Thus, a state in which a part of the ink protrudes toward the inner side of the void portion can be easily realized.

Moreover, in the three-dimensional object shaping method described above, the void portion forming step may include overlapping the plurality of ink layers in a range surrounding the predetermined region. The cavity portion thus can be formed to be wide vertically.

In the three-dimensional object shaping method described above, the void portion forming step may include overlapping the ink layer to widen the void portion. The cavity portion thus can be formed to be wide in the planar direction.

In the three-dimensional object shaping method described above, the void portion forming step may form a plurality of the void portions; and at least one of the overhang portion forming step and the cavity portion forming step may form a portion between the plurality of void portions as a reinforcement portion by the ink. The strength of the three-dimensional object including a plurality of cavity portions inside the three-dimensional object thus can be ensured.

In addition, in the three-dimensional object shaping method described above, the multilayered body may include at least one of a multilayered body formed by a shaping material and a multilayered body formed by a support material that supports the shaping material. The shaping material and the support material thus can be saved.

According to the present disclosure, the three-dimensional object shaping method capable of easily forming a cavity inside a three-dimensional object can be provided.

### BRIEF DESCRIPTION OF THE DRAWINGS

FIG. 1 is a schematic view showing a three-dimensional object shaping apparatus used in a three-dimensional object manufacturing method according to the present embodiment.
FIG. 2 is an explanatory view of an ejection unit viewed from an ejection surface side of the ink droplet.
FIG. 3 is a functional block diagram showing an example of a control unit.
FIG. 4 is a view showing an example of a cross-sectional configuration of a three-dimensional object manufactured by the three-dimensional object manufacturing method according to the embodiment.
FIG. 5 is a cross-sectional view showing an example of a cavity portion.
FIG. 6 is a perspective view showing an example of the cavity portion.
FIG. 7 is a perspective view showing another example of the cavity portion.
FIG. 8 is a cross-sectional view showing another example of the cavity portion.
FIG. 9 is a cross-sectional view showing another example of the cavity portion.
FIG. 10 is a cross-sectional view showing another example of the cavity portion.
FIG. 11 is a perspective view showing an example of a cavity portion.
FIG. 12 is a view showing an example when a plurality of cavity portions are arranged in a shaping portion.
FIG. 13 is a ZX cross-sectional view in FIG. 12.
FIG. 14 is a flowchart showing an example of a three-dimensional object manufacturing method according to the present embodiment.
FIGs. 15A to 15C are views showing manufacturing processes of a three-dimensional object manufacturing method.
FIG. 16 is a view showing an example of a shape of an ink.
FIG. 17 is a view showing an example of a case where an overhang portion is formed by a virtual ink droplet.
FIG. 18 is a flowchart showing an example of a process for adding cavity data to three-dimensional data.
FIG. 19 is a flowchart showing an example of a process when editing the cavity data.

### DETAILED DESCRIPTION OF EMBODIMENTS

Hereinafter, embodiments of a three-dimensional object shaping method according to the present disclosure will be described based on the drawings. It should be noted that the present disclosure is not to be limited by the embodiments. Furthermore, the constituent elements in the following embodiments include those that can be easily replaced by those skilled in the art, or those that are substantially the same.

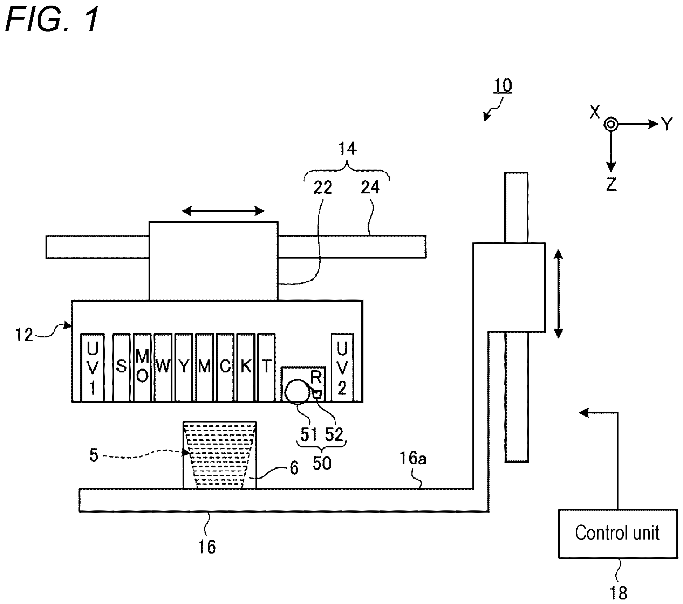

FIG. 1 is a schematic view showing a three-dimensional object shaping apparatus 10 used in the three-dimensional object manufacturing method according to the present embodiment. The three-dimensional object shaping apparatus 10 shown in FIG. 1 is a three-dimensional printer for shaping a three-dimensional object 5 through a layered shaping method. In this case, the layered shaping method is, for example, a method for shaping the three-dimensional object 5 by overlapping a plurality of layers. The three-dimensional object 5 is, for example, a three-dimensional structural object. The three-dimensional object shaping method executed in the three-dimensional object shaping apparatus 10 may be, for example, a color shaping method for shaping a three-dimensional structural object from shape information and color image information of the three-dimensional structural object.

Other than the points described below, the three-dimensional object shaping apparatus 10 may have a configuration same as or similar to a known three-dimensional object shaping apparatus. Furthermore, the three-dimensional object shaping apparatus 10 may be, for example, an apparatus in which a part of the configuration of an inkjet printer, which is a known printing apparatus for a plane, is changed. For example, the three-dimensional object shaping apparatus 10 may be an apparatus in which a part of an inkjet printer using ultraviolet-curable ink (UV ink) is changed.

The three-dimensional object shaping apparatus 10 according to the present embodiment includes an ejection unit 12, a main scan driving unit 14, a shaping table 16 serving as a mounting stand for mounting the three-dimensional object 5, and a control unit 18. The ejection unit 12 is a portion that ejects droplets that become the material of the three-dimensional object 5, and forms each layer configuring the three-dimensional object 5 by ejecting droplets or the like of a curable resin, which is a resin that cures according to a predetermined condition, and curing such resin. More specifically, the ejection unit 12 repeatedly performs over plural times, for example, a layer forming operation of forming a layer of curable resin by ejecting droplets in accordance with an instruction of the control unit 18, and a curing operation of curing the layer of curable resin formed in the layer forming operation. The ejection unit 12 forms a plurality of layers of the cured curable resin in an overlapping manner by repeatedly carrying out such operations.

Furthermore, in the three-dimensional object shaping apparatus 10 according to the present embodiment, the ejection unit 12 ejects ink droplets of colored ultraviolet-curable ink to color the surface or the inside of the three-dimensional object 5, thus shaping a colored three-dimensional object 5. Furthermore, the ejection unit 12 forms a support 6 around the three-dimensional object 5, as shown in FIG. 1, at the time of shaping the three-dimensional object 5. The support 6 is a layered structural object (support layer) for supporting the three-dimensional object 5 being shaped, and is dissolved and removed with water or the like after the shaping of the three-dimensional object 5 is completed.

The main scan driving unit 14 is a driving unit for causing the ejection unit 12 to perform a main scan. To cause the ejection unit 12 to perform the main scan in the present embodiment means, for example, to cause the inkjet head of the ejection unit 12 to perform the main scan. Furthermore, the main scan is, for example, an operation of ejecting ink droplets while moving in a preset main scanning direction (Y direction in the drawing).

The main scan driving unit 14 includes a carriage 22 and a guide rail 24. The carriage 22 is a holding portion that holds the ejection unit 12 so as to face the shaping table 16. That is, the carriage 22 holds the ejection unit 12 so that the ejecting direction of the ink droplets ejected from the ejection unit 12 is the direction toward the shaping table 16. At the time of the main scan, the carriage 22 is moved along the guide rail 24 while holding the ejection unit 12. The guide rail 24 is a rail member that guides the movement of the carriage 22, and moves the carriage 22 in accordance with an instruction of the control unit 18 at the time of the main scan.

The movement of the ejection unit 12 at the time of the main scan may be a relative movement with respect to the three-dimensional object 5. Therefore, in a variant of the configuration of the three-dimensional object shaping apparatus 10, the three-dimensional object 5 side may be moved by, for example, fixing the position of the ejection unit 12 and moving the shaping table 16.

The shaping table 16 is a mounting stand for mounting the three-dimensional object 5 being shaped on a work surface 16a which is the upper surface. The shaping table 16 has a function of moving the work surface 16a in the vertical direction (Z direction in the figure), and moves the work surface 16a in accordance with the progress of the shaping of the three-dimensional object 5 according to the instruction of the control unit 18. Thus, a distance (gap) between the surface to be shaped in the three-dimensional object 5 in the middle of shaping and the ejection unit 12 can be appropriately adjusted. In this case, the surface to be shaped of the three-dimensional object 5 is a surface on which the next layer is formed by the ejection unit 12. Furthermore, the scanning in the Z direction of moving the shaping table 16 up and down with respect to the ejection unit 12 may be carried out by moving the ejection unit 12 side in the Z direction.

The control unit 18 is a device for controlling each unit of the three-dimensional object shaping apparatus 10, and includes a CPU (Central Processing Unit) functioning as a controller that executes various processes, a RAM (Random Access Memory), ROM (Read Only Memory), and the like functioning as a memory for storing various information. The control unit 18 controls each unit of the three-dimensional object shaping apparatus 10 based on the shape information, the color image information and the like of the three-dimensional object 5 to be shaped, thus controlling the operation for shaping the three-dimensional object 5.

The three-dimensional object shaping apparatus 10 may further include various configurations necessary for shaping, coloring and the like of the three-dimensional object 5. For example, the three-dimensional object shaping apparatus 10 may include a sub scan driving unit or the like for causing the ejection unit 12 to perform a sub scan. In this case, the sub scan is, for example, an operation of relatively moving the inkjet head in the ejection unit 12 in a sub scanning direction (X direction in the figure) orthogonal to the main scanning direction with respect to the three-dimensional object 5 being shaped. For example, in a case where the three-dimensional object 5 in which the length in the sub scanning direction is longer than the shaping width of the inkjet head in the ejection unit 12 is shaped, the sub scan driving unit causes the ejection unit 12 to perform the sub scan, as necessary. More specifically, the sub scan driving unit may be a driving unit that moves the shaping table 16 in the sub-scanning direction, or may be a driving unit that moves the guide rail 24 in the sub scanning direction together with the carriage 22 holding the ejection unit 12.

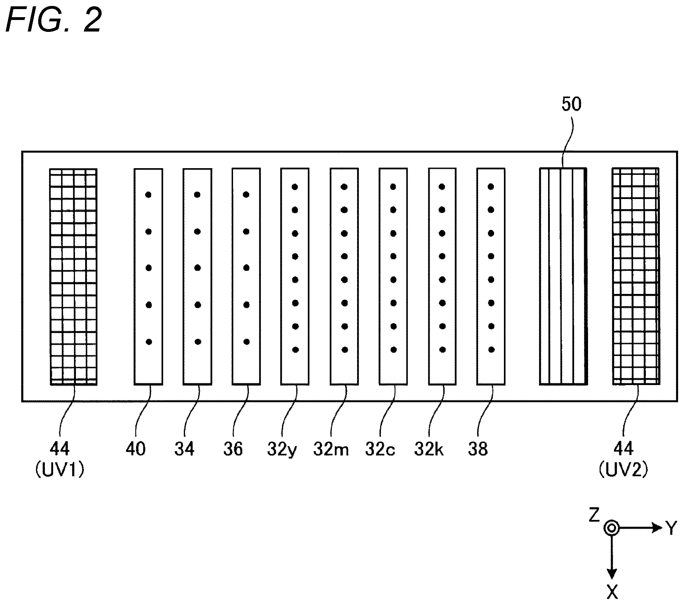

FIG. 2 is an explanatory view of the ejection unit viewed from the ejection surface side of the ink droplets. The ejection unit 12 includes a plurality of color ink heads 32y, 32m, 32c, and 32k (hereinafter referred to as a plurality of color ink heads 32y to 32k), a white ink head 36, a clear ink head 38, a shaping material head 34, a support material head 40, a plurality of ultraviolet light sources 44, and a flattening roller unit 50.

The color ink heads 32y to 32k, the white ink head 36, the clear ink head 38, and the shaping material head 34 are ejection heads, which are ejection means for ejecting droplets of curable resin through an inkjet method. The color ink heads 32y to 32k, the white ink head 36, the clear ink head 38, and the shaping material head 34 are inkjet heads that eject ink droplets of ultraviolet-curable ink, and are arranged side by side in the main scanning direction (Y direction) with their positions in the sub scanning direction (X direction) aligned.

The color ink heads 32y to 32k are inkjet heads that respectively eject ink droplets of color inks having different colors from each other. The color ink heads 32y to 32k can eject ink droplets of ultraviolet-curable ink of each color of Y (yellow), M (magenta), C (cyan), and K (black). The white ink head 36 is an inkjet head that ejects ink droplets of white (W) ultraviolet-curable ink.

Furthermore, the shaping material head 34 is an inkjet head that ejects ink droplets of ultraviolet-curable ink used as a shaping material having fluidity for forming the three-dimensional object 5. The shaping material head 34 can eject ink droplets of shaping ink (MO) of a predetermined color. For example, white ink, clear ink or the like may be used as the shaping ink.

The clear ink head 38 is an inkjet head that ejects ink droplets of ultraviolet-curable clear ink. The clear ink is a transparent (T) ink. The clear ink is an ink that contains an ultraviolet-curable resin and does not contain a colorant.

The support material head 40 is an inkjet head that ejects ink droplets containing the material (S) of the support 6 (see FIG. 2). As the material of the support 6 in this case, it is preferable to use a water soluble material which is an ultraviolet-curable ink and which can be dissolved in water after the shaping of the three-dimensional object 5. A known material for the support 6 may be used as appropriate for the material of the support 6. Furthermore, the support material head 40 is arranged in the main scanning direction with the position in the sub scanning direction aligned with respect to the color ink heads 32y to 32k, the white ink head 36, the clear ink head 38, and the shaping material head 34.

For example, a known inkjet head can be suitably used as the color ink heads 32y to 32k, the white ink head 36, the clear ink head 38, the shaping material head 34, and the support material head 40. Such inkjet heads include a nozzle row, in which a plurality of nozzles is lined in the sub scanning direction, on a surface facing the shaping table 16 (see FIG. 1). In this case, the nozzle rows in the respective inkjet heads have the same arrangement direction and are parallel to each other. Furthermore, at the time of the main scan, ink droplets are respectively ejected in the Z direction while moving in the main scanning direction orthogonal to the direction in which the nozzles are arranged.

The plurality of ultraviolet light sources 44 are ultraviolet light sources for curing the ultraviolet-curable ink, and an ultraviolet light emitting diode (LED), a metal halide lamp, a mercury lamp, and the like are used. Each of the plurality of ultraviolet light sources 44 is arranged on one end side and the other end side in the main scanning direction in the ejection unit 12 so as to sandwich the color ink heads 32y to 32k, the white ink head 36, the clear ink head 38, the shaping material head 34, and the support material head 40 in between. In the three-dimensional object shaping apparatus 10 according to the first embodiment, UV1 and UV2 are provided as the ultraviolet light source 44, where UV1 is disposed on the left end side of the ejection unit 12 in the main scanning direction (Y direction), and is turned ON when the ejection unit 12 performs main scan relatively in the right direction with respect to the shaping table 16. UV2 is disposed on the right end side of the ejection unit 12 in the main scanning direction (Y direction), and is turned ON when the ejection unit 12 performs main scan relatively in the left direction relative to the shaping table 16. Both UV1 and UV2 may be turned ON simultaneously, or only one of UV1 and UV2 may be provided and the other may not be provided depending on the curing sensitivity of the ink by the ultraviolet light.

The flattening roller unit 50 has a configuration of flattening the layer of ultraviolet-curable ink formed during the shaping of the three-dimensional object 5 and making the thickness of the layer constant. The flattening roller unit 50 is disposed between the arrangement of the color ink heads 32y to 32k, the white ink head 36, the clear ink head 38, the shaping material head 34, and the support material head 40, and the UV2 which is the ultraviolet light source 44 disposed on the other end side of the ejection unit 12. Thus, the flattening roller unit 50 is arranged in the main scanning direction with the position in the sub scanning direction aligned with respect to the arrangement of the color ink heads 32y to 32k, the white ink head 36, the clear ink head 38, the shaping material head 34, and the support material head 40. The flattening roller unit 50 is provided in the ejection unit 12 so as to be movable in the vertical direction with respect to the ejection unit 12, and makes contact with the ink layer while moving downward to make the thickness of the layer constant. The flattening roller unit 50 includes a roller portion 51 that rotates in a clockwise direction to scrape off the extra shaping material in the shaping material in a flowable state moved in the main scanning direction (left direction in the figure) together with the carriage 22, and an extra shaping material collecting mechanism 52 (see FIG. 1) that collects the extra shaping material scraped off by the roller portion 51.

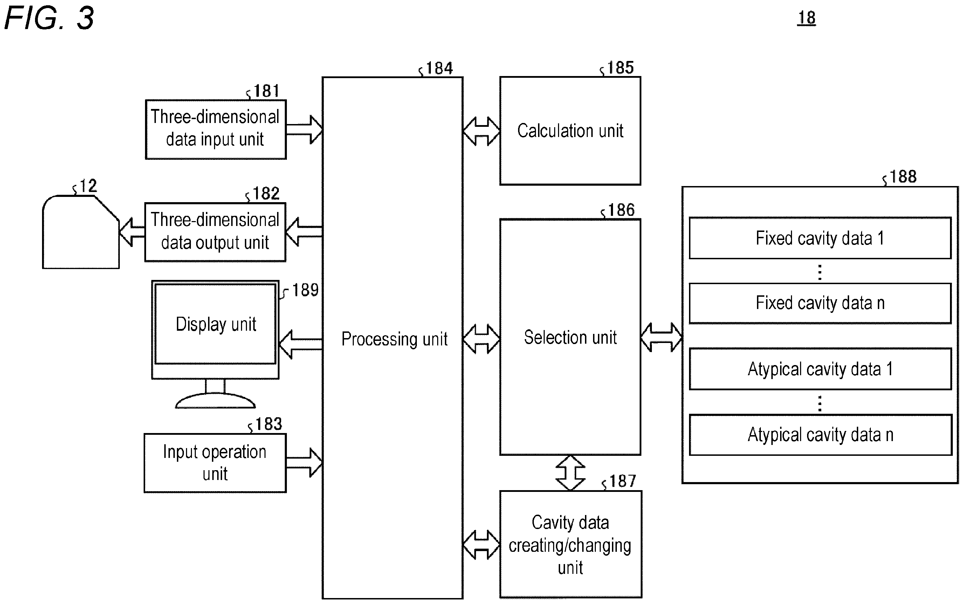

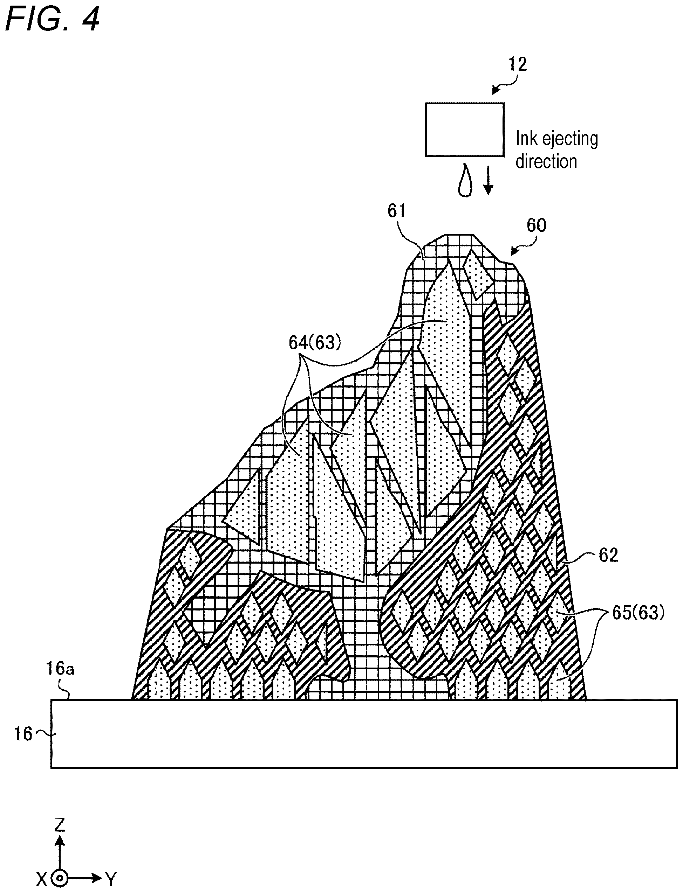

FIG. 3 is a functional block diagram showing an example of the control unit 18. In the present embodiment, according to the control of the control unit 18, for example, a three-dimensional object 60 (see FIG. 4) including a shaping unit 61, a support portion 62, and a cavity portion 63, described later, can be manufactured in addition to the three-dimensional object 5 described above. As shown in FIG. 3, the control unit 18 includes a three-dimensional data input unit 181, a three-dimensional data output unit 182, an input operation unit 183, a processing unit 184, a calculation unit 185, a selection unit 186, a cavity data creating/changing unit 187, a storage unit 188, and a display unit 189.

The three-dimensional data input unit 181 receives three-dimensional data from an input source (not shown) such as a server or a personal computer. The three-dimensional data input to the three-dimensional data input unit 181 does not include cavity data regarding the position and specifications (dimensions, volumes, etc.) of the cavity portion 63. The three-dimensional data output unit 182 outputs the three-dimensional data processed by the processing unit 184. The three-dimensional data output from the three-dimensional data output unit 182 may include cavity data. The input operation unit 183 uses an input device such as, for example, an operation button, a mouse, and a keyboard, and can input predetermined operation data.

The processing unit 184 generates additional data in which the cavity data related to the position, specifications, and the like of the cavity portion 63 are added to the three-dimensional data input from the three-dimensional data input unit 181. The processing unit 184 outputs the generated additional data to the three-dimensional data output unit 182.

The calculation unit 185 calculates specifications such as shape, dimension, volume, and the like of the additional region where the cavity data can be added to the three-dimensional data. The selection unit 186 selects the cavity data to be added to the three-dimensional data from the cavity patterns stored in the storage unit 188 based on the specifications of the additional region calculated by the calculation unit 185.

The cavity data creating/changing unit 187 creates new cavity data to be stored in the storage unit 188 based on, for example, the input result from the input operation unit 183. Furthermore, the cavity data creating/changing unit 187 is stored in the storage unit 188, for example, based on the input result from the input operation unit 183. The specifications of the cavity data are edited.

The storage unit 188 stores a plurality of cavity data. For example, the storage unit 188 stores fixed cavity data set in advance and newly generated amorphous cavity data.

As the display unit 189, for example, a display device such as a liquid crystal display is used. The display unit 189 can display the data output from the processing unit 184. For example, the display unit 189 can display the three-dimensional data or the additional data generated by the processing unit 184.

Next, a three-dimensional object manufacturing method according to an embodiment using the three-dimensional object shaping apparatus 10 will be described. FIG. 4 is a view showing an example of a cross-sectional configuration of a three-dimensional object 60 manufactured in the three-dimensional object manufacturing method according to the embodiment. In the present embodiment, the three-dimensional object 60 is, for example, a three-dimensional shape of a bird, but is not limited thereto, and may be a three-dimensional shape modeled on a person, a car, a building, a food, or the like.

As shown in FIG. 4, the three-dimensional object 60 includes a shaping unit 61, a support portion 62, and a cavity portion 63. In the shaping unit 61, for example, the three-dimensional shape of a bird is formed by the shaping material. The surface of the shaping unit 61, for example, may have a color of an outer appearance of a bird formed by a color ink. The support portion 62 is formed by the support material. The cavity portion 63 includes a shaping inner cavity portion 64 and a support inner cavity portion 65. The shaping inner cavity portion 64 is a cavity portion formed inside the shaping unit 61. The support inner cavity portion 65 is a cavity portion formed inside the support portion 62. Hereinafter, when the shaping inner cavity portion 64 and the support inner cavity portion 65 are not to be distinguished, they are referred to as "cavity portion".

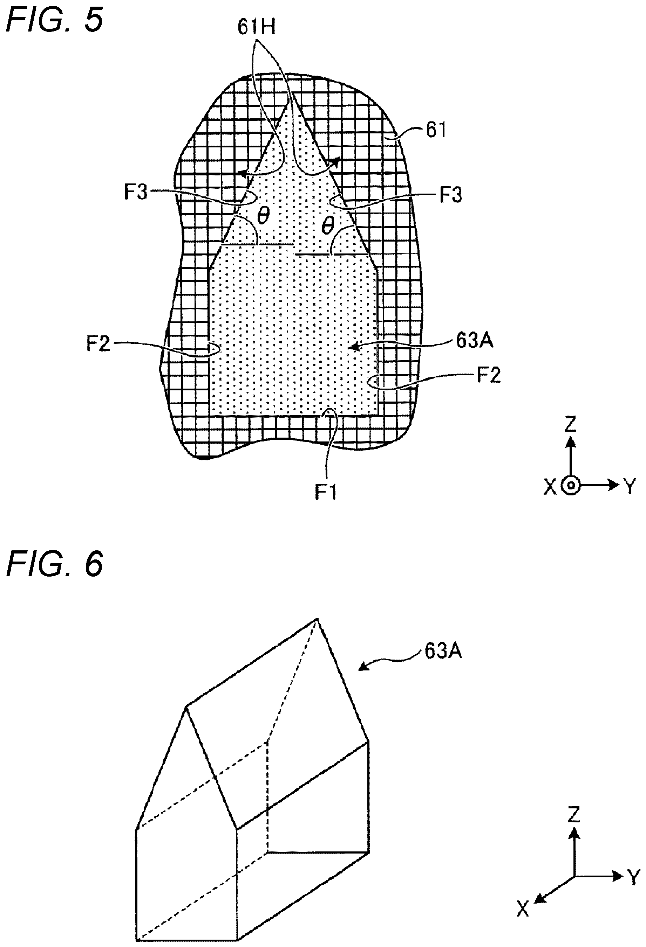

FIG. 5 is a cross-sectional view showing an example of the cavity portion 63. The cavity portion 63A shown in FIG. 5 has a bottom surface F1, a perpendicular surface F2, and an overhang surface F3. The bottom surface F1 is, for example, a plane parallel to the work surface 16a. The perpendicular surface F2 is, for example, a plane perpendicular to the work surface 16a and the bottom surface F1. The perpendicular surface F2 is disposed at both ends in the left-right direction in FIG. 5.

The overhang surface F3 is formed by the overhang portion 61H of the shaping unit 61. The overhang portion 61H is a portion of the shaping unit 61 that bulges out to the inner side of the cavity portion 63A toward the upper side. The wall surface on the inner side of the overhang portion 61H is the overhang surface F3. The overhang surface F3 is, for example, a plane inclined by an angle θ toward the inner side of the cavity portion 63A with respect to a plane parallel to the work surface 16a. The angle θ is, for example, preferably greater than or equal to 60° and less than or equal to 90°. Note that the overhang surface F3 is not limited to a plane, and may include a curved surface. In this case, the angle between the tangential plane of the curved surface and the plane parallel to the work surface 16a is preferably greater than or equal to 60° and less than or equal to 90°.

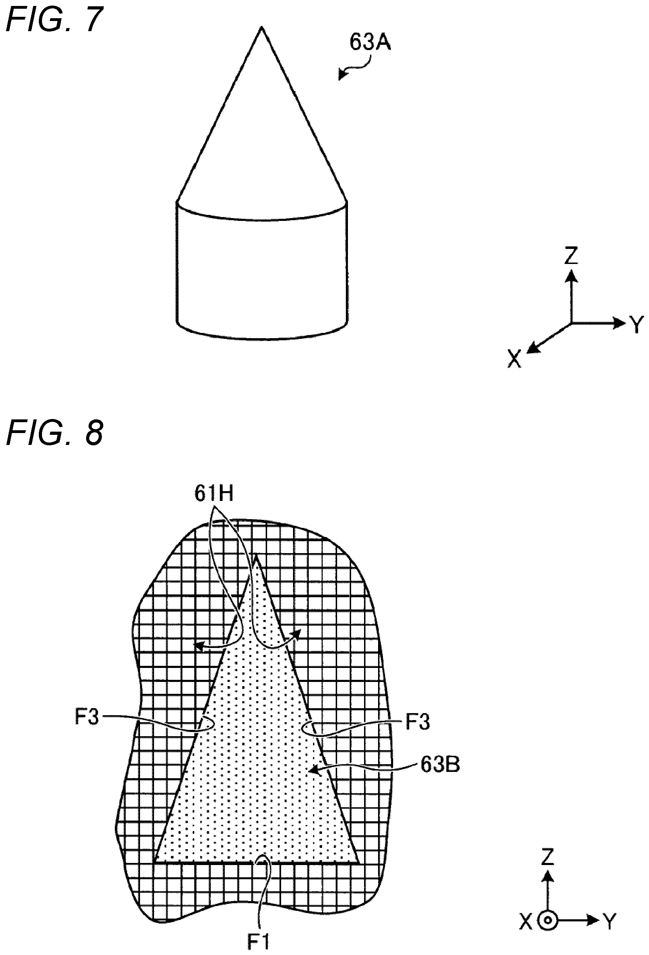

FIG. 6 is a perspective view showing an example of the cavity portion 63A. The cavity portion 63A shown in FIG. 5 can be regarded as a configuration having, for example, five surfaces F1, F2, and F3 and two surfaces that are pentagonal and non-overhanging and are perpendicular (ZY surface) as shown in FIG. 6. FIG. 7 is a perspective view showing another example of the cavity portion 63A. For example, as shown in FIG. 7, the cavity portion 63A can be regarded as a columnar cross-sectional configuration having an overhanging cone at the upper end. In this case, the overhang angle θ is also preferably greater than or equal to 60° and less than or equal to 90°.

FIG. 8 is a cross-sectional view showing another example of the cavity portion 63. The cavity portion 63B shown in FIG. 8 has a bottom surface F1 and an overhang surface F3. The cavity portion 63B is configured such that the perpendicular surface F2 is not provided with respect to the cavity portion 63A. In this case, the overhang angle θ is also preferably greater than or equal to 60° and less than or equal to 90°.

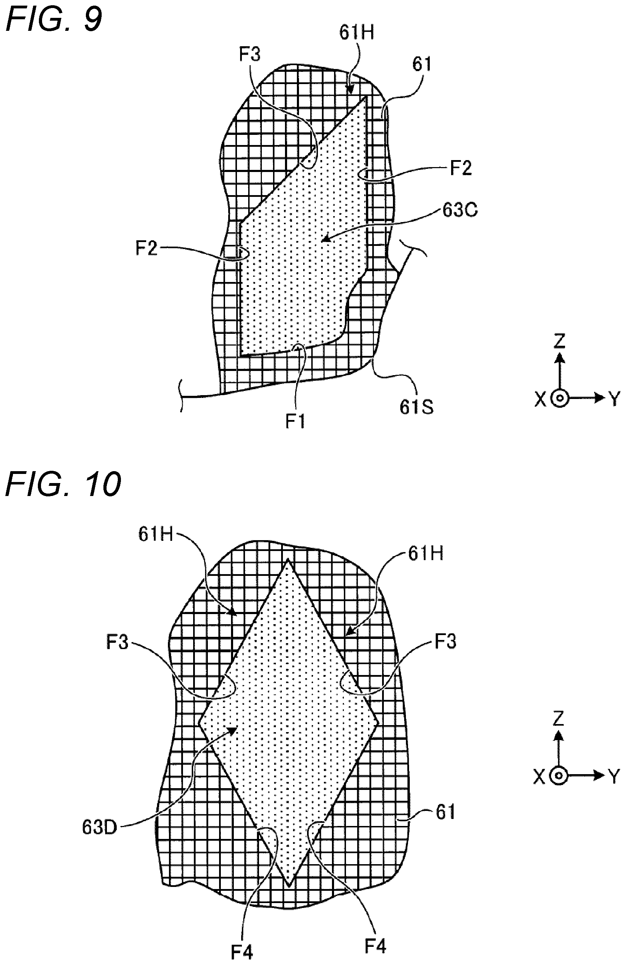

FIG. 9 is a cross-sectional view showing another example of the cavity portion 63. A cavity portion 63C shown in FIG. 9 has a bottom surface F1, a perpendicular surface F2, and an overhang surface F3. The cavity portion 63C may have a shape in which the bottom surface F1 is not a plane parallel to the work surface 16a but is curved or bent along the outer shape of the shaping unit 61. In this case, the angle θ of the overhang surface F3 is also preferably greater than or equal to 60° and less than or equal to 90°.

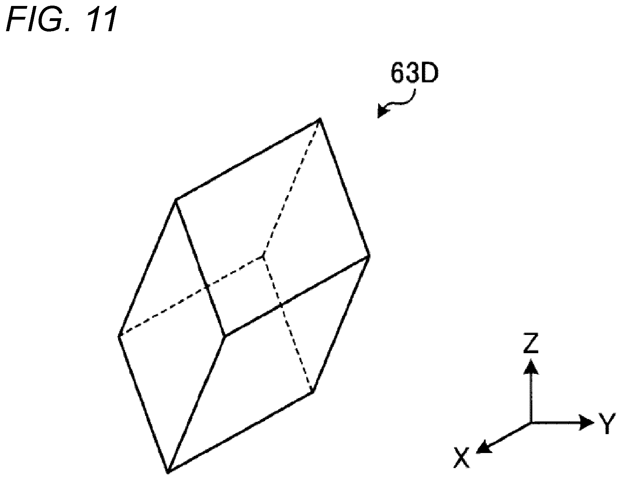

FIG. 10 is a cross-sectional view showing another example of the cavity portion 63. A cavity portion 63D shown in FIG. 10 has an outer inclined surface F4 and an overhang surface F3. In this case, the angle θ of the overhang surface F3 is also preferably greater than or equal to 60° and less than or equal to 90°. The outer inclined surface F4 is a plane inclined toward the outer side of the cavity portion 63D from the lower end of the cavity portion 63D toward the upper side. The outer inclined surface F4 is not limited to a flat surface, and may include a curved surface. FIG. 11 is a perspective view showing an example of the cavity portion 63D.

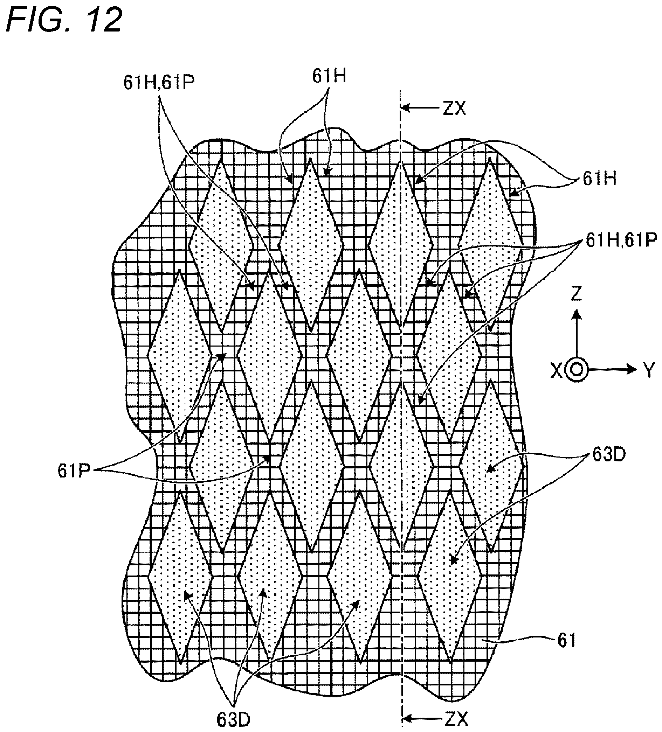

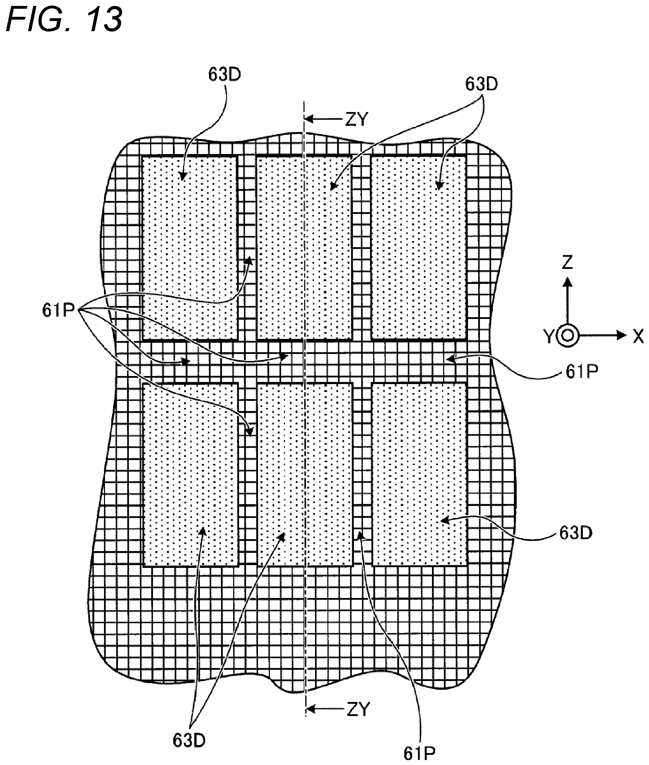

FIG. 12 is a view showing an example when a plurality of cavity portions 63D are arranged in the shaping unit 61. FIG. 13 is a ZX cross-sectional view in FIG. 12. Note that FIG. 12 is a ZY cross-sectional view in FIG. 13. As shown in FIGs. 12 and 13, the cavity portion 63D is arranged between the adjacent cavity portions 63D so that one overhang surface F3 and the other outer inclined surface F4 face each other.

In the shaping unit 61, reinforcement portions 61P are formed around the plurality of cavity portions 63D. The reinforcement portion 61P is formed in a plate shape at a portion between the adjacent cavity portions 63D and between the one overhang surface F3 and the other outer inclined surface F4. Furthermore, for example, in the example shown in FIG. 12, the reinforcement portion 61P is formed in a beam shape, for example, at a portion between the corners of the cross-sectional shape of the cavity portion 63D. The beam-shaped reinforcement portion 61P and the plate-shaped reinforcement portion 61P are thus formed between the plurality of cavity portions 63D. The plate-shaped reinforcement portion 61P formed between the one overhang surface F3 and the other outer inclined surface F4 is also a portion configuring the overhang portion 61H. The shape of the reinforcement portion 61P is not limited to a plate shape or a beam shape, and may be another shape. The same explanation can be made even when the cavity portion 63 is disposed in the support portion 62.

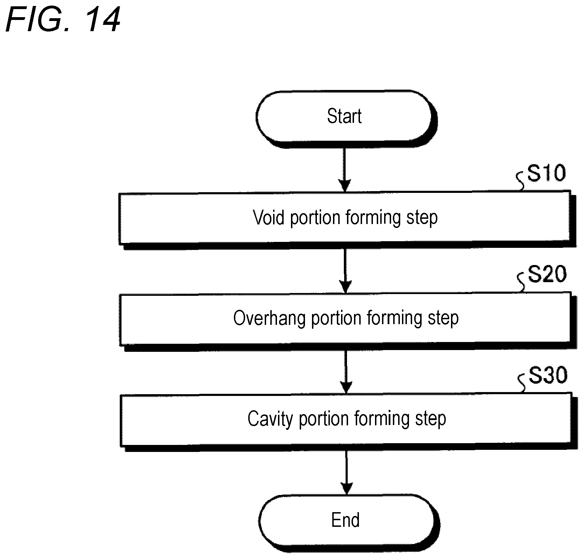

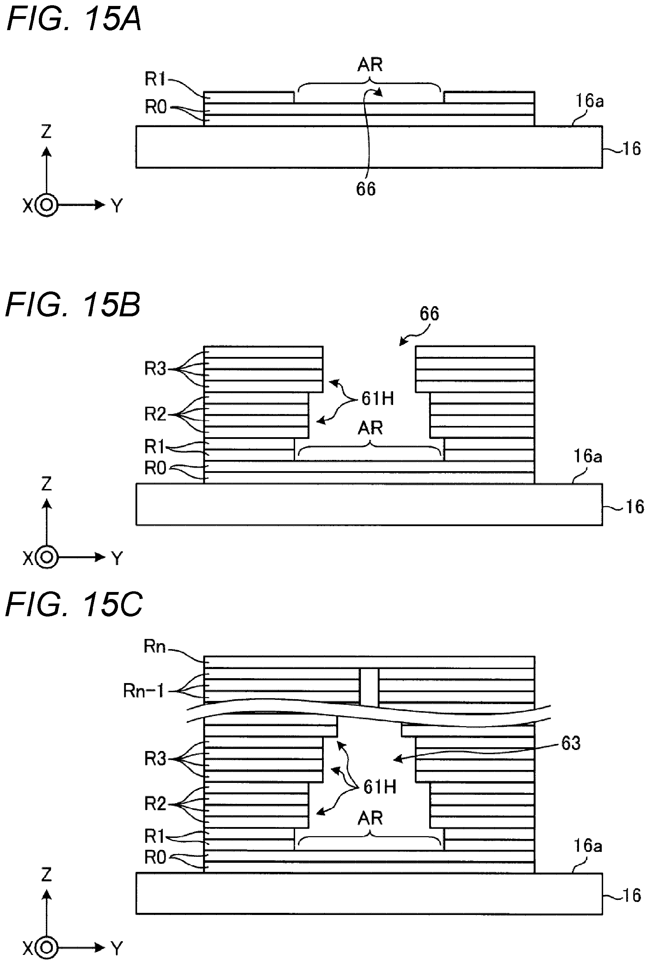

Next, a specific method for manufacturing the three-dimensional object 60 will be described. FIG. 14 is a flowchart showing an example of a three-dimensional object manufacturing method according to the present embodiment. FIG. 15 is a view showing a manufacturing process for the three-dimensional object manufacturing method. As shown in FIG. 14, the three-dimensional object shaping method according to the present embodiment includes a void portion forming step (step S10), an overhang portion forming step (step S20), and a cavity portion forming step (step S30).

In the void portion forming step S10, as shown in FIG. 15A, the ink layer R1 is layered on the work surface 16a or in the range surrounding a predetermined region AR in an uppermost layer R0 of the ink formed on the work surface 16a to form a void portion 66 surrounded by ink. In the void portion forming step S10, a plurality of ink layers may be overlapped in the perpendicular (Z) direction in the range surrounding the predetermined region AR. In this case, the cavity portion 63 can be formed to be wide vertically. In the void portion forming step S10, the ink layer may be overlapped in the perpendicular (Z) direction so as to widen the void portion 66 upward. In this case, the cavity portion 63 can be formed to be wide in the planar direction.

As shown in FIG. 15B, in the overhang portion forming step S20, when disposing a new ink on the ink facing the void portion 66 in a case where a new ink layer R2 is layered on the ink layer R1 including the void portion 66, a part of the ink protrudes out toward the inner side of the void portion 66 so that an overhang portion 61H bulging out from the outer peripheral side of the void portion 66 toward the inner side is formed upward.

The overhang portion forming step S20 may include overlapping and disposing a plurality of layers of ink on the ink in a state where a part protrudes out toward the inner side of the void portion 66. As a result, the angle formed by the work surface 16a and the overhang surface F3 is increased, so that the shape of the overhang portion 61H can be stabilized.

Furthermore, in the overhang portion forming step S20, the ink is overlapped by the number of layers in which the angle θ formed by the work surface 16a and the overhang surface F3 is greater than or equal to 60° and less than or equal to 90°. Thus, the angle θ can be sufficiently increased, and the shape of the overhang portion 61H can be stabilized.

Furthermore, the ink is dropped at a predetermined pitch Pv in a matrix shape in plan view, and the overhang portion forming step S20 is performed by dropping the ink by shifting an ink dropping position by one pitch toward the inner side of the void portion 66, so that a part of the ink protrudes out toward the inner side of the void portion 66. A state in which a part of the ink protrudes out toward the inner side of the void portion 66 thus can be easily realized.

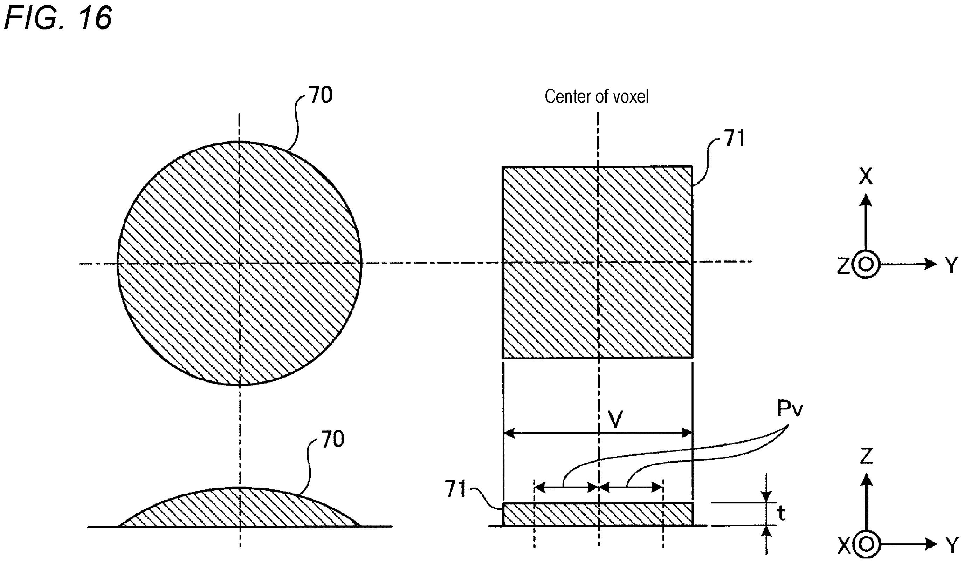

FIG. 16 is a view showing an example of the shape of the ink. As shown in FIG. 16, for example, the ink droplets 70 ejected from the ejection unit 12 onto a plane, for example, are formed in a circular shape in plan view. Furthermore, as shown in a side view, the ink droplet 70 is formed in a shape rising upward from the outer peripheral portion of the ink droplet 70 toward the central portion.

Such an ink droplet 70 can be set as, for example, a square virtual ink droplet 71 in plan view. That is, the virtual ink droplet 71 is set as a square ink droplet having, as one side, a length V that satisfies V = 3 Pv, where Pv is the pitch of the ink droplets 70 ejected by the ejection unit 12, that is, the reciprocal of the resolution. For example, in a case of the ejection unit 12 that ejects ink droplets 70 at a resolution of 600 dpi, Pv = (1 inch / 600 dots) = 42 µmV = 126 µm. In this case, the thickness t of the virtual ink droplet 71 can be a value obtained by dividing the volume of the ink droplet 70 by the area of a square of the virtual ink droplet 71. In the present embodiment, for example, t = 18 µm.

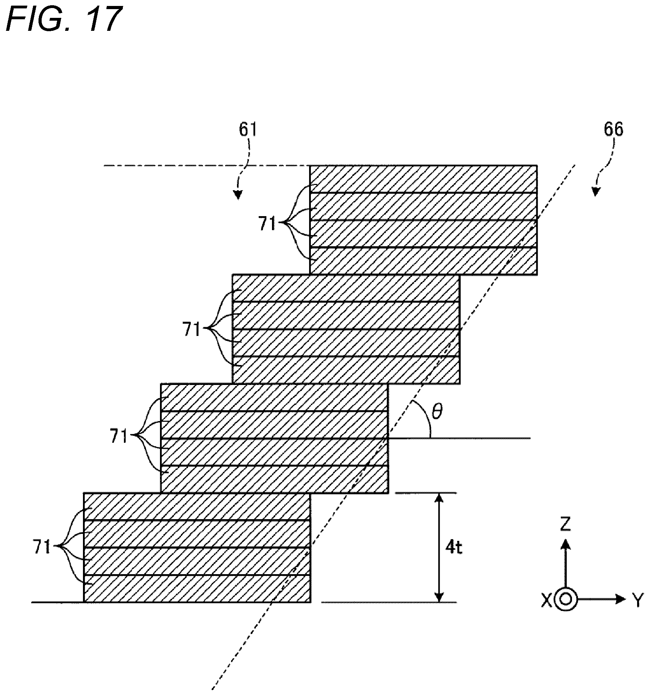

FIG. 17 is a view showing an example of a case where the overhang portion 61H is formed by the virtual ink droplet 71. In the present embodiment, when forming the overhang portion 61H, the ink is disposed so as to protrude out toward the void portion 66 side by one pitch. When the angle θ between the plane parallel to the work surface 16a and the overhang surface F3 is greater than or equal to 60°, a new ink is overlapped and layered on the ink protruded out toward the void portion 66 side, as shown in FIG. 17. Assuming the number of layers to overlap the ink is N (where N is a natural number), it can be expressed as tan θ = N · t / Pv.

In the present embodiment, for example, when Pv = 42 µm and t = 18 µm, θ ≈ 60° when N = 4 layers. Therefore, by repeating the operation of disposing a new ink so as to protrude out toward the void portion 66 side by one pitch in the case of N ≥ 4, that is, in a state where ink of four or more layers are layered, the overhang portion 61H having the overhang surface F3 in which the θ is approximately greater than or equal to 60° can be formed. Note that the value of the natural number N is not limited to 4 or more, and can be appropriately set according to, for example, each value of the pitch Pv, the length V of one side of the virtual ink droplet 71, and the thickness t.

The area of the upper portion of the void portion 66 is reduced by repeatedly performing the overhang portion forming step S20. The cavity portion forming step S30 is thus performed. In the cavity portion forming step S30, an ink layer Rn is disposed on the overhang portion 61H to close the upper part of the void portion 66, as shown in FIG. 15C. After the cavity portion 63 is formed, the shaping unit 61 is formed until the outer contour of the three-dimensional object 60 is reached.

In the void portion forming step S10 described above, a plurality of void portions 66 are formed, and in at least one of the overhang portion forming step S20 and the cavity portion forming step S30, a portion between the plurality of void portions 66 may be formed as the reinforcement portion 61P by ink. The strength of the three-dimensional object 60 can be ensured while efficiently forming the plurality of cavity portions 63 inside the three-dimensional object 60.

Furthermore, in the three-dimensional object shaping method described above, as the three-dimensional object 60, the cavity portion 63 can be formed inside at least one of the shaping unit 61 which is a multilayered body formed by the shaping material and the support portion 62 which is a multilayered body formed by the support material. The shaping material and the support material thus can be saved.

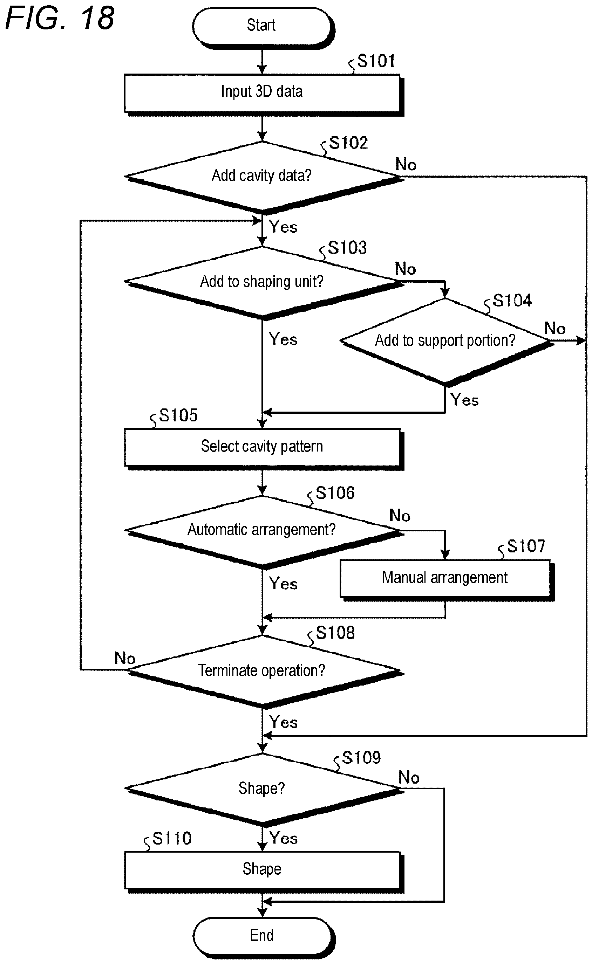

Next, a process for generating the three-dimensional data (additional data) for shaping the three-dimensional object 60 will be described. FIG. 18 is a flowchart showing an example of a process for adding cavity data to three-dimensional data. As shown in FIG. 18, when the three-dimensional data is input to the three-dimensional data input unit 181 (step S101), the processing unit 184 determines whether to add cavity data (step S102). In step S102, the processing unit 184 causes the display unit 189 to display a guidance screen to guide input on whether or not to add the cavity data to the input operation unit 183. Thereafter, the processing unit 184 determines whether to add the cavity data based on the input content of the input operation unit 183.

When adding the cavity data (Yes in step S102), whether or not to add the cavity data to the data corresponding to the shaping unit 61 in the three-dimensional data (step S103), and whether or not to add the cavity data to the data corresponding to the support portion 62 (step S104) are respectively determined. In step S103 and step S104, the processing unit 184 determines whether or not to add the cavity data based on the input content of the input operation unit 183, as in step S102.

When adding the cavity data (Yes in step S103, Yes in step S104), the cavity data to be added is selected from the cavity data stored in the storage unit 188 (step S105). In step S105, for example, the specification of the addable region is calculated by the calculation unit 185, and the selection unit 186 selects the cavity data based on the calculation result of the calculation unit 185.

After the cavity data is selected, the processing unit 184 determines whether or not to automatically arrange the cavity data (step S106). In step S106, the processing unit 184 determines whether or not to automatically arrange the cavity data based on the input content of the input operation unit 183. When the cavity data is not automatically arranged (No in step S106), the worker manually arranges the cavity data (step S107). When the cavity data is automatically arranged (Yes in step S106), the processing unit 184 generates additional data in which the cavity data is added to the three-dimensional data based on the selected cavity data. Thereafter, the processing unit 184 determines whether or not to terminate the adding process for adding the cavity data based on the input content of the input operation unit 183 (step S108).

When determined to terminate the adding process in step S108 (Yes in step S108), or when determined not to add the cavity data in step 102 or step S104 (No in step S102, No in step S104), the processing unit 184 determines whether or not to start the shaping operation based on the input content of the input operation unit 183 (step S109). When the shaping operation is performed (Yes in Step S109), a control signal for starting the shaping operation is output to the ejection unit 12 (step S110). Furthermore, when the shaping operation is not performed (No in step S109), the process is terminated without performing the shaping operation.

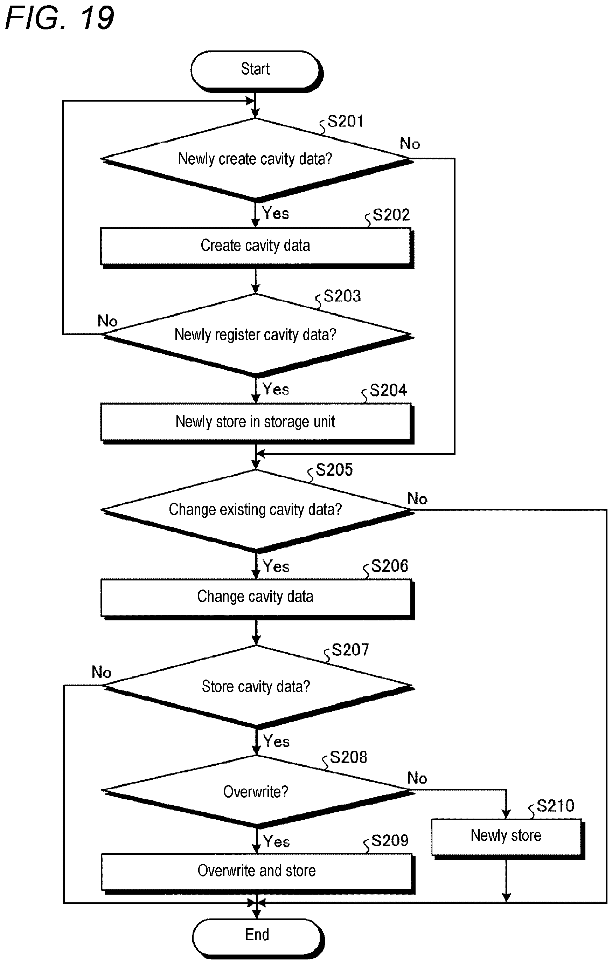

FIG. 19 is a flowchart showing an example of a process when editing the cavity data. As shown in FIG. 19, the processing unit 184 determines whether or not to newly create non-fixed cavity data that is not to be stored in the storage unit 188, based on the input content of the input operation unit 183 (step S201). When newly creating the cavity data (Yes in step S201), the cavity data creating/changing unit 187 creates new cavity data to be stored in the storage unit 188 based on, for example, an input result from the input operation unit 183 (step S202). After the new cavity data is created, whether or not to store the created cavity data in the storage unit 188 is determined (step S203). When it is determined to store the data (Yes in step S203), the selection unit 186 newly stores the created cavity data in the storage unit 188 (step S204). When it is determined not to store the data (No in step S203), the processes after step S201 are repeatedly performed.

When not newly creating the cavity data (No in step S201) or after storing the new cavity data in step S204, the processing unit 184 determines whether or not to change the existing data stored in the storage unit 188 based on the input content of the input operation unit 183 (step S205). When it is determined to change the existing data (Yes in step S205), the cavity data creating/changing unit 187 changes the specifications of the cavity data stored in the storage unit 188, for example, based on the input result from the input operation unit 183 (step S206). After the specifications of the cavity data are changed, the processing unit 184 determines whether or not to store the changed cavity data in the storage unit 188 based on the input content of the input operation unit 183 (step S207). When determined to store the data (Yes in step S207), whether or not to overwrite is determined (step S208). When determined to overwrite (Yes in Step S208), the selection unit 186 overwrites and stores the changed cavity data in the storage unit 188 (step S209). When determined not to overwrite (No in step S208), the selection unit 186 newly stores the changed cavity data in the storage unit 188 (step S210).

When the cavity data is not changed in step S205 (No in step S205), when the overwrite and storage are performed in step S209, or when new storage is performed in step S210, the process is terminated.

As described above, according to the present disclosure, the overhang portion 61H surrounding the void portion 66 can be easily formed by forming the void portion 66 at a part of the ink layer R1, and forming the overhang portion 61H from the outer peripheral side to the inner side of the void portion 66.

Furthermore, the three-dimensional object 60 interiorly including the cavity portion 63 can be easily formed by disposing ink on the overhang portion 61H and closing the cavity portion 63. The cavity portion 63 thus can be easily formed inside the three-dimensional object 60. In addition, the degree of freedom in design such as the arrangement, volume, and the like of the cavity portion 63 is increased as compared with the method for forming the cavity portion by providing a recess inside the three-dimensional object and closing it with a lid member.

Furthermore, in the three-dimensional object shaping method described above, the overhang portion forming step S20 may include overlapping and arranging a plurality of layers of ink on the ink in a state where a part protrudes out toward the inner side of the void portion 66. Thus, the angle θ formed by the work surface 16a and the overhang surface F3 is increased, so that the shape of the overhang portion 61H can be stabilized.

In the three-dimensional object shaping method described above, the overhang portion forming step S20 includes overlapping ink by the number of layers in which the angle θ formed by the work surface 16a and the overhang surface F3 is greater than or equal to 60° and less than or equal to 90°. Thus, the angle θ formed by the work surface 16a and the overhang surface F3 can be sufficiently increased, so that the shape of the overhang portion 61H can be stabilized. As the angle θ becomes closer to 90°, the overhang surface can be more stably formed, but the total volume of the voids reduces, and the amount of ink saved reduces. On the contrary, as the angle becomes closer to 60°, the formation of the overhang surface becomes unstable, but the total volume of the voids increases and the amount of ink saved increases. Furthermore, the angle θ also depends on the physical properties of the ink, and for example, as the viscosity and the surface tension become greater, the overhang surface can be stably formed even at a small angle, for example, 50°.

Furthermore, in the three-dimensional object shaping method described above, the ink is dropped at a predetermined pitch Pv in a matrix shape in plan view, and the overhang portion forming step S20 is performed by dropping an ink by shifting the ink dropping position by one pitch toward the inner side of the void portion 66, so that a part of the ink protrudes out toward the inner side of the void portion 66. A state in which a part of the ink protrudes out toward the inner side of the void portion 66 thus can be easily realized.

In the three-dimensional object shaping method described above, the void portion forming step S10 may include overlapping a plurality of ink layers R1 in a range surrounding the predetermined region AR. As a result, the cavity portion 63 can be formed to be wide vertically.

In the three-dimensional object shaping method described above, the void portion forming step S10 may include overlapping the ink layer R1 so as to widen the void portion 66. The cavity portion 63 can be formed to be wide in the planar direction.

Furthermore, in the three-dimensional object shaping method, the void portion forming step S10 may include forming a plurality of void portions 66, and at least one of the overhang portion forming step S20 and the cavity portion forming step S30 may form a portion between the plurality of void portions 66 as a reinforcement portion 61P by ink. The strength of the three-dimensional object 60 can be ensured while efficiently forming the plurality of cavity portions 63 inside the three-dimensional object 60.

Moreover, in the three-dimensional object shaping method described above, the three-dimensional object 60 may include at least one of the shaping unit 61 which is a multilayered body formed by the shaping material, and the support portion 62 which is a multilayered body formed by the support material that supports the shaping material. The shaping material and the support material thus can be saved.

In the three-dimensional object shaping method described above, the shaping method using an ultraviolet-curable ink has been described, but a shaping method using a thermoplastic ink, that is, an ink that is cured by being heated, melted, layered and returned to room temperature may be adopted. The ultraviolet light source thus becomes unnecessary.

The technical scope of the present disclosure is not limited to the above embodiments, and appropriate modifications can be made without departing from the scope of the present disclosure.

## Claims

1. A three-dimensional object shaping method for forming a multilayered body by layering an ink layer on a work surface, the three-dimensional object shaping method comprising:
a void portion forming step of forming a void portion (66) surrounded by the ink by layering the ink layer on the work surface or in a range surrounding a predetermined region in an uppermost layer of the ink layer formed on the work surface; and
an overhang portion forming step of forming upward an overhang portion (61H) that bulges out from an outer peripheral side toward an inner side of the void portion and surrounds the void portion in a state where a part of the ink protrudes out toward the inner side of the void portion at a layering angle in a range in which an outer shape of the void portion is not lost when disposing new ink on the ink facing the void portion in a case where a new ink layer is layered on the ink layer including the void portion.

2. The three-dimensional object shaping method further comprising a cavity portion forming step of forming a cavity portion (63) by disposing the ink on the overhang portion and closing the void portion.

3. The three-dimensional object shaping method according to claim 1 or 2, wherein the overhang portion forming step includes overlapping and disposing a plurality of layers of the ink on the ink in a state where a part protrudes out toward the inner side of the void portion.

4. The three-dimensional object shaping method according to claim 3, wherein in the overhang portion forming step, the ink is overlapped by a number of layers in which an angle formed by the work surface and a wall surface on the inner side of the overhang portion is greater than or equal to 60° and less than or equal to 90°.

5. The three-dimensional object shaping method according to any one of claims 1 to 4, wherein
the ink is dropped at a predetermined pitch in a matrix shape in a plan view, and
in the overhang portion forming step, the ink is dropped by shifting an ink dropping position by one pitch toward the inner side of the void portion so that a part of the ink protrudes out toward the inner side of the void portion.

6. The three-dimensional object shaping method according to any one of claims 1 to 5, wherein the void portion forming step includes overlapping the plurality of ink layers in a range surrounding the predetermined region.

7. The three-dimensional object shaping method according to claim 6, the void portion forming step includes overlapping the ink layer to widen the void portion.

8. The three-dimensional object shaping method according to any one of claims 1 to 7, wherein
the void portion forming step forms a plurality of the void portions; and
at least one of the overhang portion forming step and the cavity portion forming step forms a portion between the plurality of void portions as a reinforcement portion by the ink.

9. The three-dimensional object shaping method according to any one of claims 1 to 8, wherein the multilayered body includes at least one of a multilayered body formed by a shaping material and a multilayered body formed by a support material that supports the shaping material.
